# EUROPEAN PATENT SPECIFICATION

(11) **EP 2 075 179 B1**
(45) Date of publication and mention of the grant of the patent: **08.08.2012**
(21) Application number: 08254119.4
(22) Date of filing: 23.12.2008
(51) Int. Cl.: B62J 3/00, B62J 17/00

(54) **Motorcycle**
Motorrad
Motocyclette

(30) Priority: 27.12.2007 JP 2007336646; 17.11.2008 JP 2008293201
(43) Date of publication of application: 01.07.2009
(73) Proprietor: Yamaha Hatsudoki Kabushiki Kaisha, Iwata-shi, Shizuoka-ken 438-8501 (JP)
(72) Inventor: Takahashi, Kuniyuki c/o Yamaha Hatsudoki Kabushiki Kaisha, Shizuoka-ken 438-8501 (JP); Wakamatsu, Katsumitsu c/o Yamaha Hatsudoki Kabushiki Kaisha, Shizuoka-ken 438-8501 (JP)
(74) Representative: Moreland, David

(56) References cited:
- EP-A1- 0 755 819
- EP-A1- 1 905 678
- JP-A- 2004 216 938
- JP-U- 63 013 392

## Description

### FIELD OF THE INVENTION

The present invention relates to a motorcycle including a horn.

### BACKGROUND TO THE INVENTION

A horn of a motorcycle needs to deliver a sound at a predetermined or higher volume to a person or the like in front of the motorcycle. For this purpose, not only the volume of the sound emitted by the horn itself but also a mounted position of the horn is of importance. In general, it is preferable to mount the horn on the front of the vehicle.

Motorcycles are known which include a full cowl, i.e., having a cover for covering substantially the whole front portion of a vehicle body. Among motorcycles having full cowls, there is a motorcycle having a front cowl for covering front portions of handlebars, an inner panel disposed to extend between positions above and behind a front wheel, and side covers disposed laterally outside the inner panel and extending rearward.

However, in such a motorcycle having a full cowl including an inner panel, if the horn is disposed in front of the inner panel, a flow of flowing air in front of the inner panel is disturbed by the horn. As a result, the flowing air for cooling may not be effectively supplied to parts (e.g., an engine in an air-cooled engine, a radiator in a water-cooled engine) disposed behind the inner panel and in need of cooling.

In Japanese Utility Model Application Laid-open No. 63-13392, there is described a motorcycle in which an opening for a horn is formed in an inclined face at an upper portion of an inner panel and the horn and the inclined face of the inner panel are substantially disposed in the same plane. By disposing these components in this way, the horn does not protrude from the inner panel and it is possible to suppress disturbance of the flowing air in front of the inner panel.

JP 63-13392 indicates that a warning sound of the horn is not reduced because the horn faces the opening in a rectifying face of the inner panel. However, the opening is positioned immediately behind the front fork and therefore the warning sound of the horn may be reduced in reality.

EP0755819 describes a scooter type motorcycle comprising a body cover. The body cover comprises a front body cover surrounding a head pipe of the body frame. A steering shaft is inserted in the head pipe and a front fork is secured to a lower end of the steering shaft. Running wind introduction openings for introducing wind against the running vehicle are formed in the front right and left parts of the front cover. An inner fender is disposed to face the introduction openings in the front cover. A horn is located under the inner fender and opposite the running wind introduction openings in the front body cover. The horn extends through the top wall of the inner fender so as to be welded to the head pipe. The inner fender is located above a wheel of the motorcycle.

JP2004-216938 describes a motorcycle in which a leg shield is allocated in an anterior part of the motorcycle and is in the form of a gently curved shape which projects near the front part of the handle towards the front of the vehicle and covers the leg near the rear of the front wheel from so that the steering head tube, the down frame, and front fork can be covered. A horn is built in to the leg shield in a position to the right hand side of a head lamp.

The present invention has been made with the above point of view and is to provide a motorcycle with which it is easy to secure a sufficient sound volume of a horn.

### SUMMARY OF THE INVENTION

Aspects of the present invention are described by the independent claim 1. Preferred but non-essential features of the claims are described by the dependent claims.

Described herein is a motorcycle comprising:
a front fork rotatably supporting a front wheel at a lower end portion thereof;
a front cowl for covering a front portion of the head pipe;
an inner panel disposed behind the front wheel and below the front cowl; and
a horn, at least part of which is disposed laterally outside the front fork in a position where the horn overlaps with the inner panel in a front view.

The motorcycle comprises a head pipe for supporting the front fork.

The motorcycle comprises left and right side covers disposed laterally outside the inner panel to extend rearward.

The horn is disposed behind the inner panel. A horn opening is formed in the inner panel in front of the horn.

The horn may be disposed to face substantially forward behind the horn opening.

The horn may be disposed so as to be spaced rearward from the horn opening.

A cylindrical portion may be provided at a periphery of the horn opening in the inner panel. The cylindrical portion may extend rearward from the horn opening.

The horn opening may be formed above a vertical middle position of the inner panel in the front view.

The inner panel may be formed with a main opening in a position laterally inside the horn in the front view and configured to permit flowing air to pass rearward therethrough.

The main opening may extend laterally across a lateral center of the inner panel in the front view.

The motorcycle may further comprise a radiator disposed behind the main opening. The horn may be positioned laterally outside the radiator in the front view. The horn may be directly or indirectly supported by the radiator. An upper end of the horn may be positioned above an upper end of the radiator.

The motorcycle may further comprise an engine having a cylinder at least partially positioned behind the main opening. The horn may be positioned laterally outside the cylinder in the front view.

The horn opening may be formed to a lateral side of the main opening.

One or more airflow openings may be formed below the main opening and the horn opening in the inner panel.

The motorcycle may further comprise an exhaust pipe disposed to the right or left of a center of the motorcycle. The horn may be disposed on an opposite side of the exhaust pipe with respect to a lateral direction of the vehicle.

The motorcycle may comprise a single-cylinder engine.

The motorcycle may comprise a plurality of horns. At least two of the plurality of horns may be disposed in the same vertical position in the front view. At least two of the plurality of horns may be positioned to the right and left of a lateral center of the inner panel in the front view.

The present invention can achieve a motorcycle with which it is easy to secure a sufficient sound volume of a horn.

### BRIEF DESCRIPTION OF THE DRAWINGS

These and other aspects of the present invention will now be described, by way of example only, with reference to the accompanying drawings, in which:
FIG. 1 is a side view of a motorcycle according to an embodiment of the present invention;
FIG. 2 is a front view of the motorcycle of FIG. 1;
FIG. 3 is a front view of an inner panel;
FIG. 4 is a partial side view showing an inside of the motorcycle of FIG. 1;
FIG. 5 is a partial plan view of a horn and the inner panel;
FIG. 6 is a perspective view of the horn viewed from behind;
FIG. 7 is a front view showing a positional relationship between an engine and the horn;
FIG. 8 is a partial side view showing an inside of a motorcycle according to another embodiment of the present invention;
FIG. 9 is a partial side view showing an inside of a motorcycle according to a further embodiment of the present invention;
FIG. 10 is a side sectional view of an inner panel and a horn according to a variation on the previous embodiments;
FIG. 11 is a front view of a motorcycle according to a further variation on the previous embodiments;
FIG. 12 (a) is a perspective view showing an opening for a horn according to a further variation;
FIG. 12 (b) is a perspective view showing an opening for a horn according to a further variation; and
FIG. 12 (c) is a perspective view showing an opening for a horn according to a still further variation.

### DETAILED DESCRIPTION OF THE DRAWINGS

### Embodiment 1

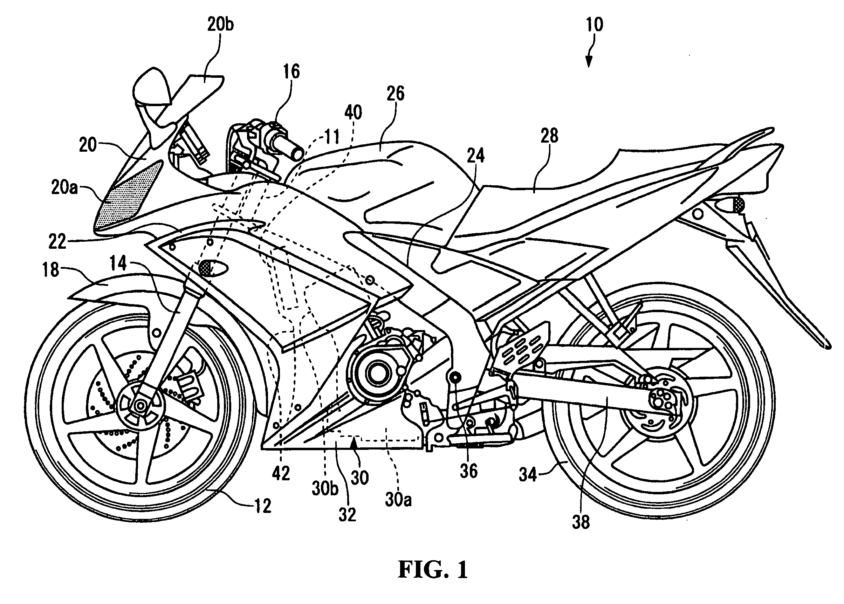

As shown in FIG. 1, a motorcycle 10 according to a first embodiment of the invention includes a vehicle frame 24 having head pipes 11. On the vehicle frame 24, a fuel tank 26 and a seat 28 are supported. Rear arms 38 are pivotally supported by the vehicle frame 24 with a pivot shaft 36 interposed therebetween. On rear end portions of the rear arms 38, a rear wheel 34 is rotatably supported.

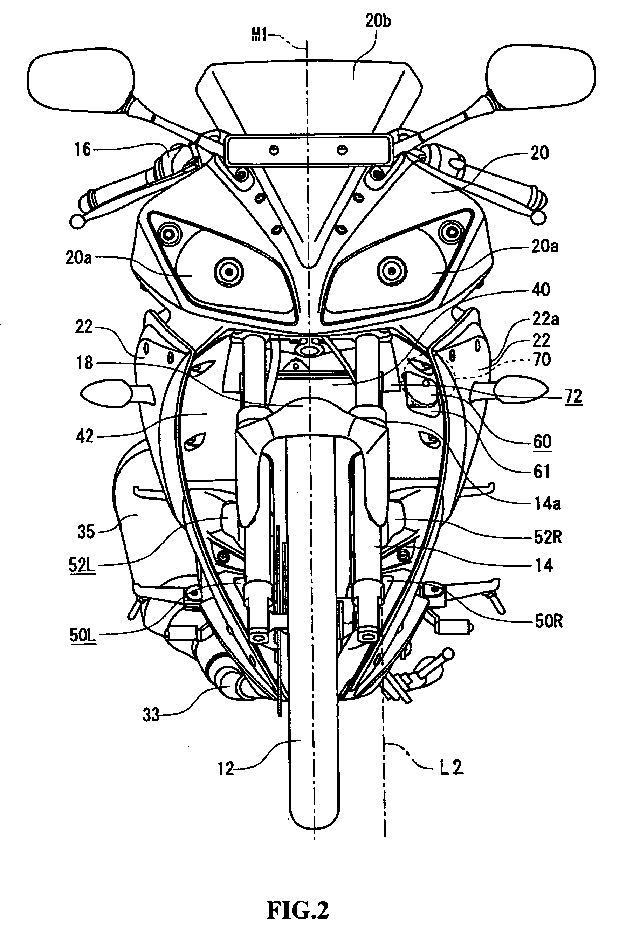

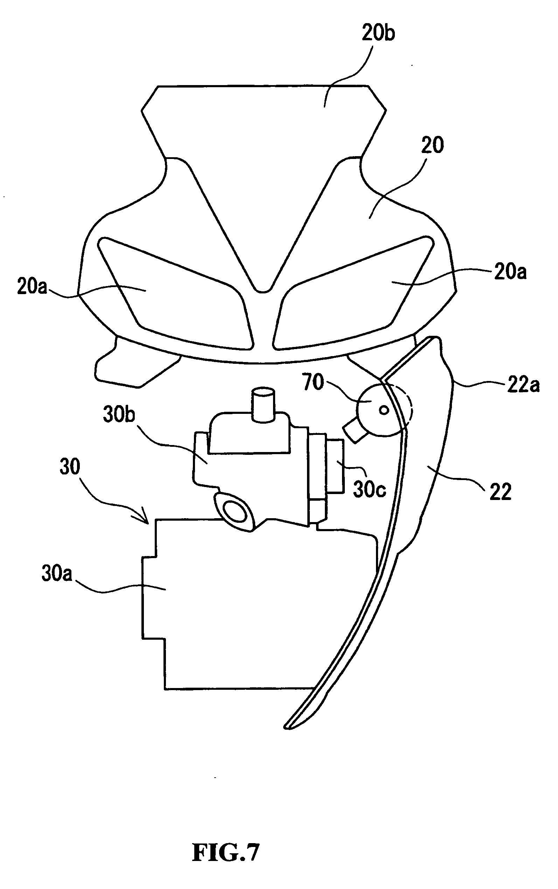

From the vehicle frame 24, an engine 30 is suspended. In the embodiment, the engine 30 is a water-cooled single-cylinder engine. However, the engine 30 may be an air-cooled engine and may be a multi-cylinder engine. The engine 30 has an engine body 30a and a cylinder 30b extending diagonally forward and upward from the engine body 30a. On a right side of the cylinder 30b when viewed from the front, a water pump 30c is mounted as shown in FIG. 7. As shown in FIG. 2, on a left side of the vehicle viewed from the front, an exhaust pipe 33 is disposed. The exhaust pipe 33 is connected to the cylinder 30b. A muffler 35 is mounted on a rear end portion of the exhaust pipe 33.

As shown in FIG. 1, front forks 14 are supported for turning by the head pipes 11. A handlebar 16 is mounted on upper portions of the front forks 14. At lower portions of the front forks 14, a front wheel 12 is rotatably supported. The front forks 14 are also mounted with a fender 18 for covering upper end rear portions of the front wheel 12.

In front of the head pipes 11, a front cowl 20 is provided. The front cowl 20 is provided with a headlight 20a and a wind shielding plate 20b. Under the front cowl 20, an inner panel 42 extending between positions above and behind the front wheel 12 is disposed. In the embodiment, the fender 18 is provided above and behind the front wheel 12 and therefore, the inner panel 42 is disposed to extend between positions above and behind the fender 18. Laterally outside the inner panel 42, left and right side covers 22 extending rearward are provided, respectively.

The lateral direction in the present description refers to a lateral direction when the motorcycle 10 is viewed from the front. Therefore, the left and right are reversed when the motorcycle 10 is viewed from a rider seated on the seat 28 of the motorcycle 10. A left side and a right side of the vehicle refer to a left side and a right side of the vehicle with respect to a central line M1 (see FIG. 2).

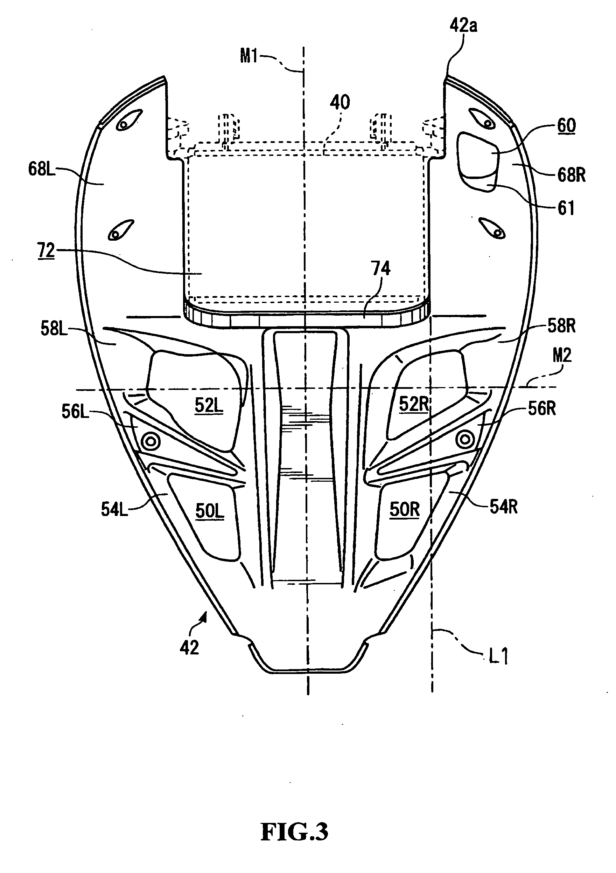

FIG. 3 is a front view of the inner panel 42. As shown in FIG. 3, the inner panel 42 is formed with a main opening 72 extending laterally across the center (i.e., the central line M1) of the vehicle. In the present specification, the "openings in the inner panel" refer to holes formed inside and a recessed portion formed at a peripheral edge of the inner panel. The main opening 72 is a portion recessed downward at an upper portion of inner panel 42. In the embodiment, the main opening 72 is formed above a middle position (i.e., a central line M2) in a vertical direction of the inner panel 42. The main opening 72 is an opening for allowing backward passage of the flowing air from the front and has a function of supplying the flowing air to a radiator 40 in the embodiment.

Under the main opening 72, the inner panel 42 is formed with airflow openings 52L, 52R and airflow openings 50L, 50R. The airflow opening 52L and the airflow opening 52R are formed in bilaterally symmetric positions. The airflow opening 50L and the airflow opening 50R are also formed in bilaterally symmetric positions. The airflow openings 52L, 52R are formed above the airflow openings 50L, 50R. The airflow openings 50L, 50R, 52L, 52R have functions of supplying flowing air to parts (e.g., the engine 30) disposed behind the inner panel 42 and in need of cooling.

Around the airflow openings 50L, 50R, 52L, 52R, air leading faces 54L, 54R, 58L, 58R spreading toward the front of the vehicle are formed, respectively. The air leading faces 54L, 54R, 58L, and 58R form duct shapes tapered rearward from the front of the vehicle to thereby effectively send flowing air to the back of the inner panel 42. Between the airflow opening 52L and the airflow opening 50L, a reinforcement rib 56L is formed. Between the airflow opening 52R and the airflow opening 50R, a reinforcement rib 56R is formed. Under the main opening 72, a reinforcement rib 74 extending in the lateral direction is formed.

On left and right opposite sides of the main opening 72 of the inner panel 42, air leading walls 68L, 68R rising to front ends of the side covers 22 are formed, respectively. The right air leading wall 68R is formed with a horn opening 60. The horn opening 60 is formed to the lateral side of the main opening 72. The horn opening 60 is formed above the middle position in the vertical direction of the inner panel 42 and, in the embodiment, formed between an upper end 42a of the inner panel 42 and a one-quarter position of a vertical length of the inner panel 42 from the upper end 42a. However, as will be described later, a position of the horn opening 60 can be changed in various ways and is not limited to the above position.

Although the size of the horn opening 60 is not especially limited, the horn opening 60 is smaller than the main opening 72 in the embodiment. The horn opening 60 may be larger or smaller than or about the same size as any one of the airflow openings 50L, 50R, 52L, 52R. A shape of the horn opening 60 may be rectangular or another shape such as a circular, elliptical, polygonal or the like.

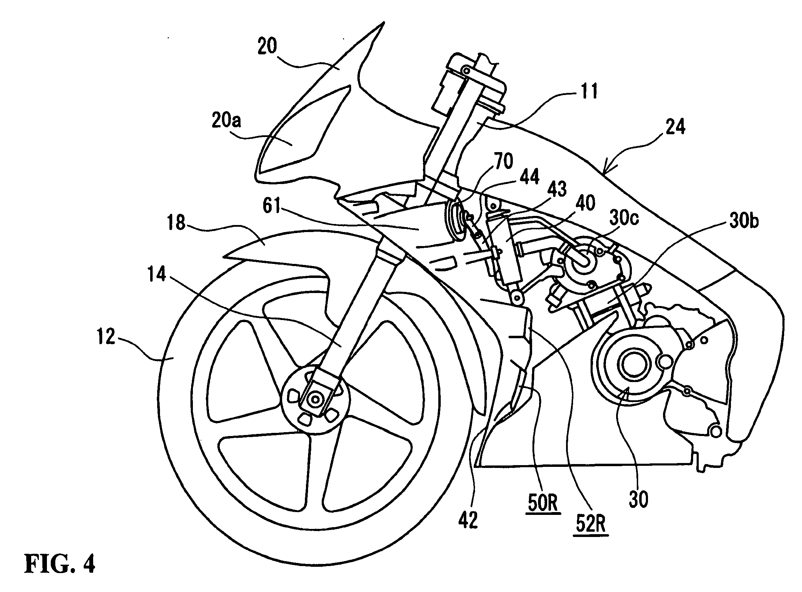

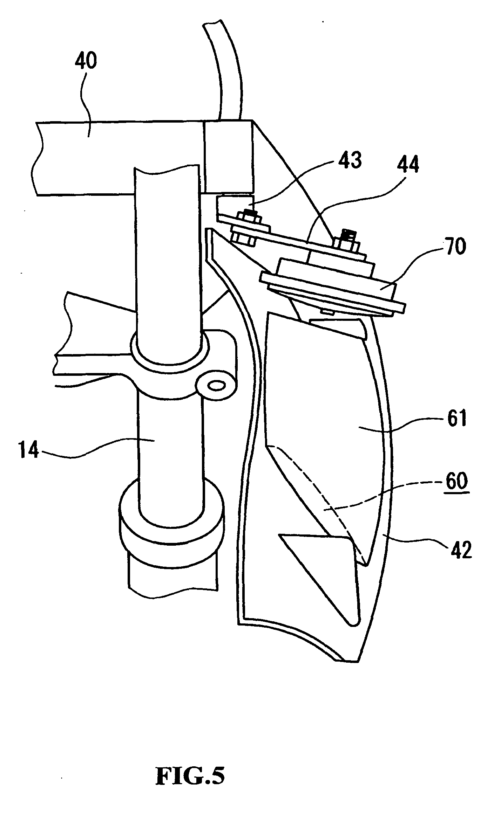

As shown in FIGS. 4 and 5, a cylindrical portion 61 extending rearward is provided on a back side of the horn opening 60 in the inner panel 42. In the embodiment, the cylindrical portion 61 is part of the inner panel 42 and is integral with the inner panel 42. However, the cylindrical portion 61 may be formed separately from the inner panel 42 and subsequently mounted on the inner panel 42. In the embodiment, the cylindrical portion 61 is formed in a shape of a prismatic cylinder. However, the shape of the cylindrical portion 61 is not especially limited and may be a circular cylinder, an elliptic cylinder, a triangular cylinder, or other shapes. The cylindrical portion 61 extends substantially horizontally in a side view but may be slightly inclined forward or backward. As shown in FIG. 4, the cylindrical portion 61 extends substantially horizontally in the embodiment.

As shown in FIGS. 2 and 4, the radiator 40 is disposed behind the main opening 72 in the inner panel 42. The flowing air passing through the main opening 72 is supplied to the radiator 40.

As shown in FIGS. 4 and 5, a bracket 43 is supported on a right portion of the radiator 40. The bracket 43 is mounted with a stay 44 for supporting a horn 70. In this way, the horn 70 is supported by the radiator 40 with the stay 44 and the bracket 43 interposed therebetween. The horn 70 is disposed behind the cylindrical portion 61 of the inner panel 42. Therefore, the horn 70 is disposed in a position spaced rearward from the horn opening 60 in the inner panel 42. Moreover, the horn 70 is disposed to face substantially forward through the horn opening 60 so as to emit a warning sound forward through the horn opening 60. In other words, the horn 70 is disposed to face substantially forward. The horn 70 is oriented substantially in a direction along a longitudinal direction of the cylindrical portion 61.

In the present specification, "to be disposed to face substantially forward" includes not only to be disposed to face forward in a strict sense but also to be regarded as being generally disposed to face forward. In other words, it includes not only to be disposed parallel to a plane formed by a horizontal line and a vertical line, i.e., a plane orthogonal to a front-rear direction of the vehicle body but also to be slightly inclined with respect to the plane. For example, if the horn 70 is inclined to such a degree that a left or right end and an upper or lower end of the horn 70 can be seen from the front, the horn 70 is regarded as being disposed to face substantially forward. Furthermore, if an angle of inclination with respect to the plane is 30° or smaller, for example, the horn 70 is also regarded as being disposed to face substantially forward.

Positions of the horn opening 60 and the horn 70 when viewed from the front will now be described. As shown in FIG. 2, the horn opening 60 and the horn 70 are disposed to the right of the main opening 72. However, part of the horn 70 may be positioned inside the main opening 72. The horn opening 60 and the horn 70 are disposed to the right of the radiator 40. Specifically, the horn opening 60 and the horn 70 are disposed between a right end of the radiator 40 and an outmost end 22a of the right side cover 22.

Moreover, the horn opening 60 and the horn 70 are disposed to the right of the front forks 14. Specifically, the horn opening 60 is disposed between a right end 14a of the front forks 14 and the outmost end 22a of the right side cover 22. A lateral width of the horn 70 is shorter than a distance between the right end 14a of the front forks 14 and the outmost end 22a of the right side cover 22 and the horn 70 is disposed between the right end 14a of the front forks 14 and the outmost end 22a of the right side cover 22. Although the whole horn 70 is disposed to the right of the right end 14a of the front fork 14 in the present embodiment, it is also possible that only a part of the horn 70 is positioned to the right of the right end 14a of the front fork 14.

As shown in FIG. 7, the horn 70 is disposed to the right of the cylinder 30b of the engine 30. Specifically, the horn 70 is disposed between a right end of the cylinder 30b and the outmost end 22a of the right side cover 22.

As described above, according to the motorcycle 10 according to the present embodiment, at least a part of the horn 70 is disposed to overlap with the inner panel 42 and to the right of the front forks 14 (i.e., on the outside in a lateral direction) in a front view. Therefore, according to the present embodiment, the sound output from the horn 70 is directly transmitted forward without interference with the front fork 14. As a result, it is possible to provide a motorcycle 10 with which a sufficient sound volume of the horn 70 can be secured. It is also possible to inhibit the horn 70 from interrupting airflow.

In the motorcycle 10 according to the present embodiment, the front wheel 12 has a smaller width than a front wheel of a prior-art motorcycle of this type. If the front wheel has a large width, a distance between left and right tubes of the front forks is relatively large. In this case, even if the horn is disposed inside the front fork in the lateral direction, there is no serious interference of the sound of the horn and the front forks. If the front wheel 12 has a smaller width, however, the distance between the left and right tubes of the front forks 14 is short and the sound of the horn 70 and the front fork 14s are more likely to interfere with each other without making a special arrangement as in the embodiment. As seen from the above, the smaller the width of the front wheel 12 is, the more remarkable effect the present embodiment exerts.

On the other hand, in the motorcycle 10 according to the present embodiment, the front wheel 12 has the small width as described above. Therefore, the lateral distance between the front forks 14 is short and relatively large areas are secured at portions of the inner panel 42 outside the front forks 14 in the front view. As a result, it is possible to dispose the horn 70 easily laterally outside the front fork 14 in the front view. The inventors of the present application focused on this point and decided to dispose the horn 70 laterally outside the front forks 14.

According to the motorcycle 10 according to the present embodiment, the inner panel 42 (see FIG. 3) is formed with the main opening 72 extending laterally across the lateral center and the horn opening 60 at least partially positioned outside the main opening 72. The horn 70 is disposed to face substantially forward behind the horn opening 60 in the inner panel 42 (see FIGS. 4 and 5). Therefore, the rearward flow of the flowing air through the main opening 72 from the front of the vehicle is not disturbed by the horn 70. In the embodiment, the radiator 40 is disposed behind the main opening 72 and the flow of the flowing air supplied to the radiator 40 is not disturbed by the horn 70. Therefore, reduction in the cooling performance of the radiator 40 is suppressed. Moreover, because the horn 70 is disposed to face substantially forward, the warning sound from the horn 70 is smoothly output forward. Furthermore, because the horn 70 is positioned outside the main opening 72, it is possible to suppress interference of the warning sound from the horn 70 with the front wheel 12. Therefore, it is possible to deliver the warning sound at sufficient volume to a person or the like in front of the vehicle without increasing the horn 70 itself in size. As a result, the horn 70 can be reduced in size, weight, or cost.

According to the present embodiment, the horn 70 is disposed so as to be spaced rearward from the horn opening 60 in the inner panel 42 (see FIG. 5). Therefore, even if mud splashed from the ground spatters around the horn opening 60, the mud is less likely to stick to the horn 70. The warning sound from the horn 70 is less likely to be weakened by the mud sticking to the horn 70.

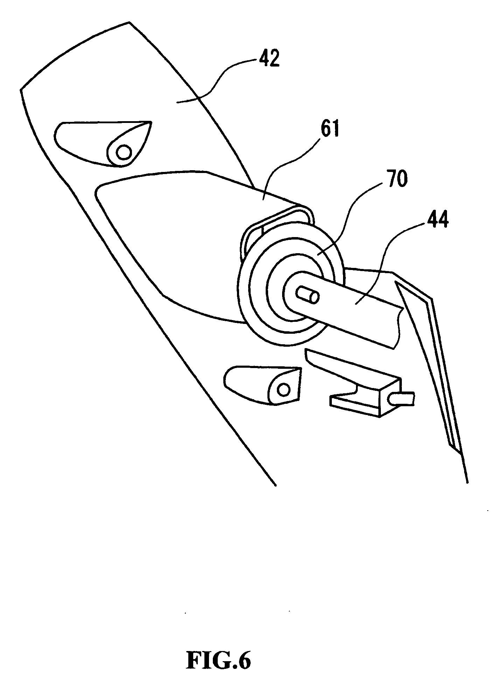

Furthermore, according to the present embodiment, the cylindrical portion 61 extending rearward is formed around the horn opening 60 in the inner panel 42 (see FIG. 6). In this way, it is possible to further suppress sticking of the mud splashed from the ground to the horn 70. Moreover, the cylindrical portion 61 suppresses diffusion of the warning sound output from the horn 70. In other words, the cylindrical portion 61 functions as a so-called megaphone and it is possible to effectively emit the warning sound from the horn 70 forward. Moreover, the cylindrical portion 61 functions as a so-called reinforcement rib to thereby enhance strength of the inner panel 42. As a result, it is possible to secure sufficiently high strength of the inner panel 42 in spite of the plurality of openings (the main opening 72, the airflow openings 50L, 50R, the airflow openings 52L, 52R, and the horn opening 60 in the embodiment) formed in the inner panel 42.

According to the present embodiment, the horn opening 60 is formed above the middle position in the vertical direction of the inner panel 42 in the front view (see FIG. 3). An upper end of the horn 70 is positioned above an upper end of the radiator 40 (see FIG. 4). Because the horn opening 60 and the horn 70 are in high positions, mud splashed from the ground is less likely to stick to the horn 70. Moreover, because the horn opening 60 and the horn 70 are in high positions, it is possible to effectively deliver the warning sound from the horn 70 to a person or the like in front of the vehicle.

According to the present embodiment, the horn opening 60 is formed to the lateral side of the main opening 72 (see FIG. 3). Therefore, it is possible to secure sufficient space for forming other openings (the airflow openings 50L, 50R, 52L, 52R in the embodiment) in the inner panel 42 below the main opening 72.

According to the present embodiment, the airflow openings 50L, 50R, 52L, 52R are formed in the inner panel 42 and below the main opening 72 and the horn opening 60. Therefore, it is possible to introduce the flowing air backward from the front of the inner panel 42 through the airflow openings 50L, 50R, 52L, 52R. Therefore, it is possible to effectively cool the vehicle parts with the flowing air taken in through the airflow openings 50L, 50R, 52L, 52R while preventing sticking of mud or the like to the vehicle parts such as the engine 30 to some extent with the inner panel 42.

According to the present embodiment, the horn opening 60 and the horn 70 are disposed to the right of the front forks 14 in the front view (see FIG. 2). Therefore, the warning sound output from the horn 70 is not intercepted or impeded by the front forks 14. As a result, it is possible to deliver the warning sound at sufficient volume to a person or the like in front of the vehicle without increasing the horn 70 in size. According to the present embodiment, because the horn 70 need not be provided in front of the front forks 14, an interval between the front forks 14 (i.e., a fork pitch) can be shortened. In this way, it is possible to shorten a width of the front wheel 12. Moreover, it is possible to increase a steering angle of the handlebar 16 and it is possible to provide a motorcycle 10 with a small turning circle.

According to the present embodiment, the horn 70 is supported on the radiator 40 with the bracket 43 and the stay 44 interposed therebetween (see FIG. 5). In other words, the horn 70 is indirectly supported on the radiator 40. By supporting the horn 70 on the radiator 40 in this way, a member for supporting the horn 70 need not be provided to the vehicle frame 24. Moreover, it is easy to dispose the horn 70 close to the inner panel 42. Furthermore, the radiator 40 is a relatively heavy and large vehicle part and is less susceptible to vibration. Therefore, by supporting the horn 70 on the radiator 40, it is possible to support the horn 70 securely. Moreover, the warning sound from the horn 70 is less liable to be attenuated by any vibrations. Although the horn 70 is supported indirectly by the radiator 40 in the embodiment, it is possible to support the horn 70 directly on the radiator 40.

According to the present embodiment, the horn 70 is disposed to the right of the middle position in the lateral direction of the vehicle and the exhaust pipe 33 is disposed to the left of it (see FIG. 2). By disposing the horn 70 on the opposite side to the exhaust pipe 33 in this way, it is possible to easily avoid interference of the horn 70 and the exhaust pipe 33 with each other and it is possible to relatively freely select a mounted position of the horn 70 without being restricted by the position of the exhaust pipe 33.

The engine 30 According to the present embodiment is a single-cylinder engine. Therefore, the engine 30 has a shorter width than a parallel multi-cylinder engine. A width of the radiator 40 is short, too. Therefore, it is easy to dispose the horn opening 60 and the horn 70 to the lateral side of the main opening 72.

### Embodiment 2

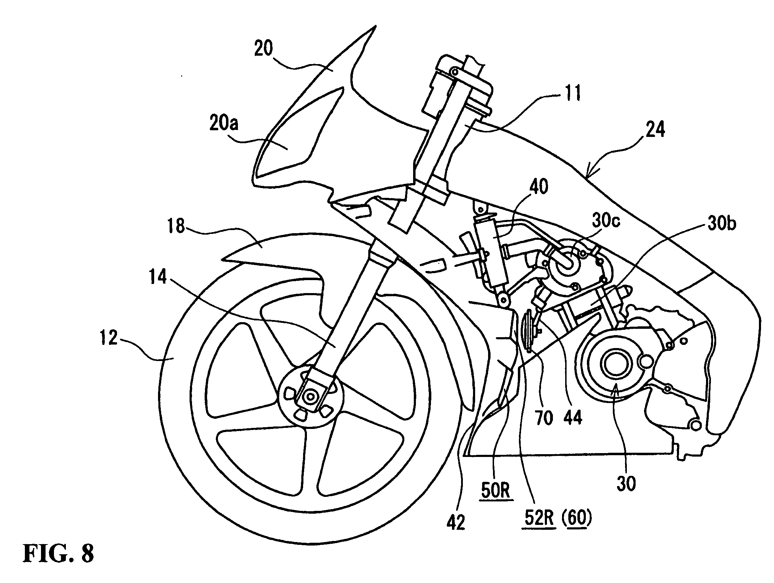

A second embodiment of the present invention will mow be described with reference to FIG. 8. This second embodiment is different from the first embodiment described above in that the horn opening 60 formed to the lateral side of the main opening 72 is omitted and that the airflow opening 52R is used as the horn opening. In other words, in the second embodiment, the airflow opening 52R in the first embodiment functions as the horn opening 60.

In this embodiment, a bracket (not shown) is supported by the cylinder 30b of the engine 30 and the stay 44 for the horn 70 is mounted on the bracket. In this embodiment, the horn 70 is disposed to face substantially forward behind the horn opening (=the airflow opening 52R).

Other portions are similar to those in the first embodiment. Portions similar to those in the first embodiment are provided with similar reference numerals to omit description of such similar portions. In the present embodiment, at least a part of the horn 70 is disposed again to overlap with the inner panel 42 and laterally outside the front forks 14 in the front view.

### Embodiment 3

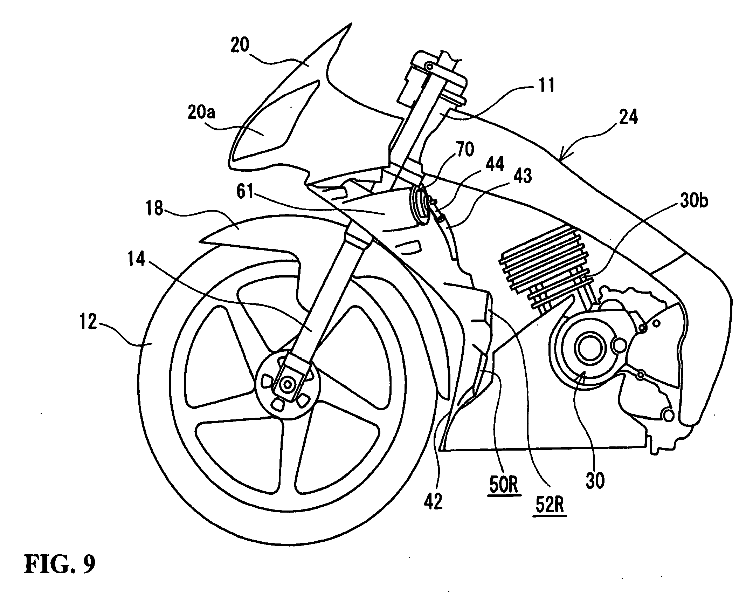

A third embodiment of the present invention will now be described with reference to FIG. 9. This third embodiment is different from the first embodiment in that the engine 30 is an air-cooled engine and that the radiator 40 is omitted. In this third embodiment, portions similar to those in the first embodiment are provided with similar reference numerals to omit description of these similar portions. In the present embodiment, the horn 70 is disposed to the right of the cylinder 30b of the engine 30 in the front view (see FIG. 7). The horn 70 is disposed to overlap with the inner panel 42 and laterally outside the front forks 14 in the front view.

In the present embodiment, the flowing air passing through the main opening 72 in the inner panel 42 is supplied to the cylinder 30b of the engine 30. Here, the horn opening 60 and the horn 70 are formed to the lateral side of the main opening 72. The horn opening 60 and the horn 70 are disposed to the right of the cylinder 30b of the engine 30. Therefore, the flow of the flowing air to be supplied to the cylinder 30b is not disturbed by the horn 70. Therefore, there is no fear that the horn 70 impairs the cooling performance of the engine 30.

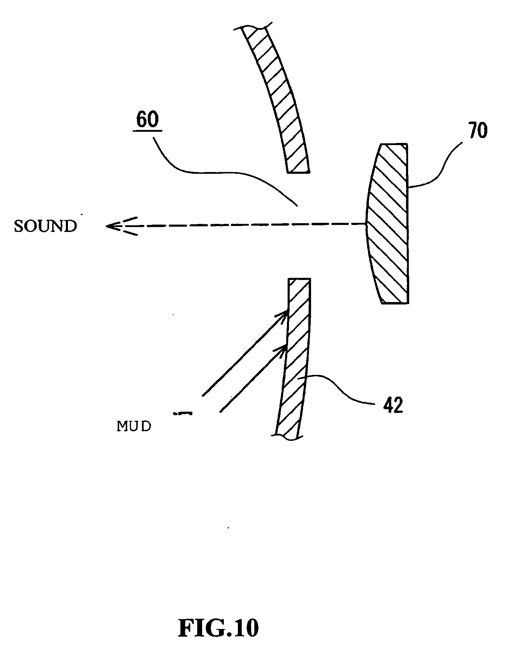

Although the cylindrical portion 61 is provided behind the horn opening 60 in the inner panel 42 in the above respective embodiments, the cylindrical portion 61 may be omitted as shown in FIG. 10. In this form, too, it is possible to suppress sticking of mud splashed from the ground to the horn 70 by disposing the horn 70 in the position spaced rearward from the horn opening 60. If mud is less likely to stick (e. g. , when the position of the horn opening 60 is high), the horn 70 may be provided not in the position spaced rearward from the horn opening 60 but in the horn opening 60.

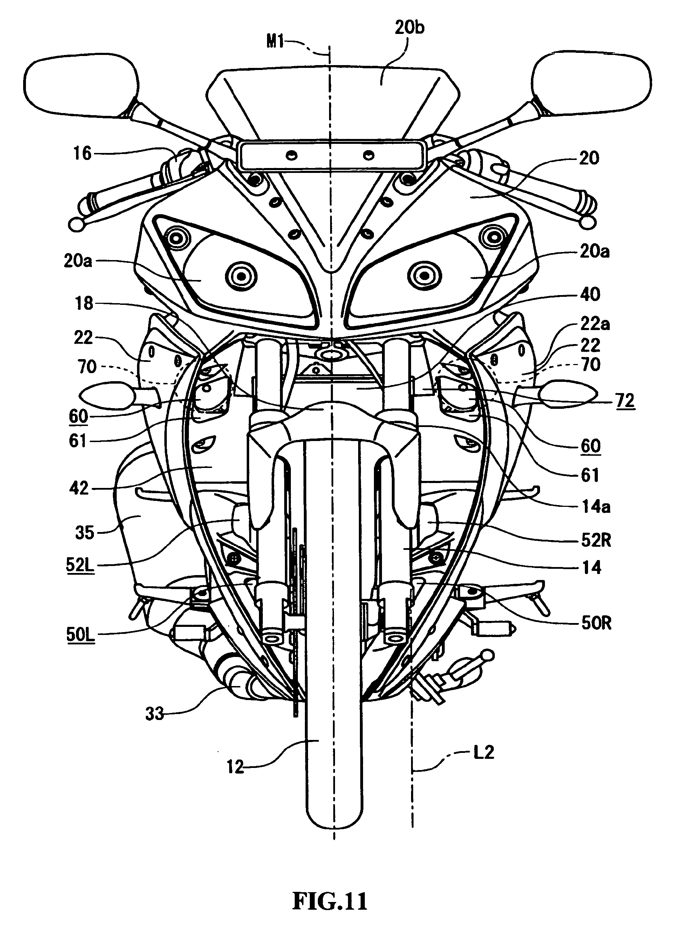

In the above respective embodiments, the horn opening 60 and the horn 70 are provided on the right side in the front view. However, the horn opening 60 and the horn 70 may be provided on the left side in the front view. Also in this case, the horn 70 is disposed to overlap with the inner panel 42 and on the left side, that is, the outside of the front fork 14 in the lateral direction. As shown in Fig. 11, the horn opening 60 and the horn 70 may be provided on each of the right side and the left side in the front view. In this case, each of the left and right horns 70 is disposed to overlap with the inner panel 42 and laterally outside the front fork 14.

A positional relationship between the horn opening 60 and the main opening 72 is not limited to that in the above respective embodiments. The horn opening 60 and the main opening 72 may be displaced from each other in the vertical direction when viewed from the front. Not the whole horn opening 60 need be positioned outside the main opening 72 but only part of the horn opening 60 may be positioned outside the main opening 72 in the lateral direction.

The horn 70 may partially overlap the front forks 14 when viewed from the front. Moreover, the horn opening 60 and the front forks may partially overlap each other when viewed from the front.

The horn 70 may partially overlap the horn opening 60 when viewed from the front. The whole horn 70 may be disposed inside the horn opening 60.

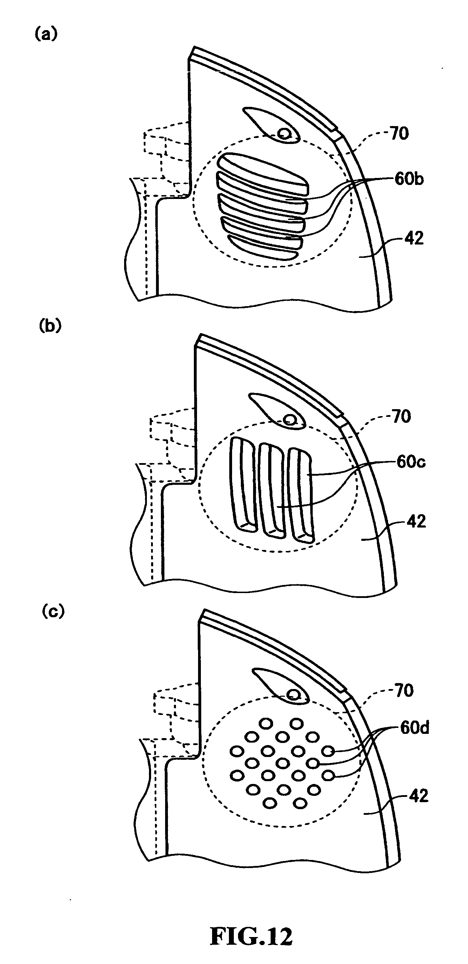

In the above embodiments, the horn opening 60 is formed of the single opening. However, there is no restriction on the shape or the like of the horn opening 60. It is essential only that the horn opening 60 permits the sound output from the horn 70 to pass through forward and other various embodiments are conceivable. For example, as shown in FIG. 12 (a), the horn opening may be formed of a plurality of louver openings 60b extending in a horizontal direction. As shown in FIG. 12(b), the horn opening may be formed of a plurality of louver openings 60c extending in a vertical direction. As shown in FIG. 12(c), the horn opening may be formed of a plurality of small holes 60d such as so-called punched holes.

The main opening 72 is not limited to one in the above embodiment either and there are many conceivable variations. For example, the main opening 72 may be formed of louver openings, punched holes, or the like. The main opening 72 that lets the flowing air pass through may be replaced with a dummy opening that does not let the flowing air pass through.

In the specification, "the openings in the inner panel" include both the hole formed inside the inner panel (i.e., the fully enclosed opening) and the recessed portion formed at the peripheral edge of the inner panel (i.e., the partially enclosed opening).

"To be at least partially positioned outside the main opening in the lateral direction" refers to be at least partially positioned outside a virtual line L1 shown in FIG. 3 if the embodiment is taken as an example. The virtual line L1 is a line showing a right end position of the main opening 72 in the lateral direction. In the first embodiment, the whole horn opening 60 is positioned to the right of the virtual line L1, which means that the whole horn opening 60 is positioned on the outside the main opening 72. In the second embodiment, on the other hand, the airflow opening 52R functions as the horn opening and is partially positioned to the left of the virtual line L1. Therefore, only part of the horn opening is positioned outside the main opening 72.

"To be at least partially positioned outside the front forks in the lateral direction" refers to be at least partially positioned outside a virtual line L2 shown in FIG. 2 if the embodiment is taken as an example. The virtual line L2 is a line showing a right end position of the front forks 14 in the lateral direction. In the first embodiment, the whole horn opening 60 is positioned to the right of the virtual line L2, which means that the whole horn opening 60 is positioned outside the front forks 14. In the second embodiment, on the other hand, the airflow opening 52R functions as the horn opening and is partially positioned to the left of the virtual line L2. Therefore, only part of the horn opening is positioned outside the front forks 14.

As described above, the invention is useful for a motorcycle.

### Explanation of Reference Numerals

- 10: motorcycle
- 11: head pipe
- 12: front wheel
- 14: front fork
- 20: front cowl
- 22: side cover
- 30: engine
- 30a: cylinder
- 33: exhaust pipe
- 40: radiator
- 42: inner panel
- 50L, 50R, 52L, 52R: airflow opening
- 60: horn opening
- 61: cylindrical portion
- 70: horn
- 72: main opening

## Claims

1. A motorcycle (10) comprising:
a front fork (14) rotatably supporting a front wheel (12) at a lower end portion thereof;
a head pipe for supporting the front fork;
a front cowl (20) for covering a front portion of the head pipe (11);
an inner panel (42) disposed behind the front wheel (12) and below the front cowl (20);
left and right side covers disposed laterally outside the inner panel and extending rearward; and
a horn (70), at least part of which is disposed laterally outside the front fork (14) in a position where the horn (70) overlaps with the inner panel (42) in a front view; wherein
the horn (70) is disposed behind the inner panel (42) and a horn opening (60) is formed in the inner panel (42) in front of the horn (70).

2. A motorcycle (10) according to claim 1, wherein the horn (70) is disposed to face substantially forward behind the horn opening (60).

3. A motorcycle (10) according to claim 1 or 2, wherein the horn (70) is disposed so as to be spaced rearward from the horn opening (60).

4. A motorcycle (10) according to any preceding claim, wherein a cylindrical portion (61) extending rearward is provided at a periphery of the horn opening (60) in the inner panel (42).

5. A motorcycle (10) according to any preceding claim, wherein the horn opening (60) is formed above a vertical middle position of the inner panel (42) in the front view.

6. A motorcycle (10) according to any preceding claim, wherein the inner panel (42) is formed with a main opening (72) in a position laterally inside the horn (70) in the front view and configured to permit flowing air to pass rearward therethrough.

7. A motorcycle (10) according to claim 6, wherein the main opening (72) extends laterally across a lateral center of the inner panel (42) in the front view.

8. A motorcycle (10) according to claim 6 or 7, further comprising a radiator (40) disposed behind the main opening (72), wherein at least one of:
the horn (70) is positioned laterally outside the radiator (40) in the front view;
the horn (70) is directly or indirectly supported by the radiator (40); and
an upper end of the horn (70) is positioned above an upper end of the radiator (40).

9. A motorcycle (10) according to claim 6, 7 or 8, further comprising an engine (30) having a cylinder (30a) at least partially positioned behind the main opening (72), wherein the horn (70) is positioned laterally outside the cylinder (30a) in the front view.

10. A motorcycle (10) according to any one of claims 6 to 9, wherein the horn opening (60) is formed to a lateral side of the main opening (72).

11. A motorcycle (10) according to any one of claims 6 to 10, wherein one or more airflow openings (50L, 50R, 52L, 52R) are formed below the main opening (72) and the horn opening (60) in the inner panel (42).

12. A motorcycle (10) according to any preceding claim, further comprising an exhaust pipe (33) disposed to the right or left of a center of the motorcycle (10), wherein the horn (70) is disposed on an opposite side of the exhaust pipe (33) with respect to a lateral direction of the motorcycle (10).

13. A motorcycle (10) according to any preceding claim, further comprising a single-cylinder engine (30).

14. A motorcycle (10) according to any preceding claim, comprising a plurality of horns (70).

15. A motorcycle (10) according to claim 14, wherein at least two of the plurality of horns (70) are disposed in the same vertical position in the front view.

16. A motorcycle (10) according to claim 14 or 15, wherein at least two of the plurality of horns (70) are positioned to the right and left of a lateral center of the inner panel (42) in the front view.

## Patentansprüche

1. Motorrad (10), das Folgendes umfasst:
eine Vordergabel (14), die an einem unteren Endabschnitt derselben drehbar ein Vorderrad (12) trägt,
ein Kopfrohr zum Tragen der Vordergabel,
eine vordere Verkleidung (20) zum Abdecken eines vorderen Abschnitts des Kopfrohrs (11),
eine innere Platte (42), die hinter dem Vorderrad (12) und unter der vorderen Verkleidung (20), angeordnet ist,
eine linke und eine rechte Seitenabdeckung, die von der inneren Platte seitlich nach außen angeordnet sind und sich nach hinten erstrecken, und
eine Hupe (70), von der wenigstens ein Teil von der Vordergabel (14) seitlich nach außen in einer Position angeordnet ist, wo sich die Hupe (70) in einer Vorderansicht mit der inneren Platte (42) überlappt, wobei
die Hupe (70) hinter der inneren Platte (42) angeordnet ist und eine Hupenöffnung (60) in der inneren Platte (42) vor der Hupe (70) geformt ist.

2. Motorrad (10) nach Anspruch 1, wobei die Hupe (70) so angeordnet ist, dass sie im Wesentlichen hinter der Hupenöffnung (60) nach vorn zeigt.

3. Motorrad (10) nach Anspruch 1 oder 2, wobei die Hupe (70) so angeordnet ist, dass sie mit Zwischenraum von der Hupenöffnung (60) nach hinten angeordnet ist.

4. Motorrad (10) nach einem der vorhergehenden Ansprüche, wobei ein zylindrischer Abschnitt (61), der sich nach hinten erstreckt, an einem Umfang der Hupenöffnung (60) in der inneren Platte (42) bereitgestellt wird.

5. Motorrad (10) nach einem der vorhergehenden Ansprüche, wobei die Hupenöffnung (60) in der Vorderansicht oberhalb einer vertikalen Mittelposition der inneren Platte (42) geformt ist.

6. Motorrad (10) nach einem der vorhergehenden Ansprüche, wobei die innere Platte (42) mit einer Hauptöffnung (72) in einer Position, in der Vorderansicht von der Hupe (70) seitlich nach innen, angeordnet und dafür konfiguriert ist, zu ermöglichen, das strömende Luft nach hinten durch dieselbe hindurchgeht.

7. Motorrad (10) nach Anspruch 6, wobei sich die Hauptöffnung (72) in der Vorderansicht seitlich über eine seitliche Mitte der inneren Platte (42) erstreckt.

8. Motorrad (10) nach Anspruch 6 oder 7, das ferner einen Kühler (40) umfasst, der hinter der Hauptöffnung (72) angeordnet ist, wobei wenigstens eines von dem Folgenden gilt:
die Hupe (70) ist in der Vorderansicht von dem Kühler (40) seitlich nach außen angeordnet,
die Hupe (70) wird unmittelbar oder mittelbar durch den Kühler (40) getragen, und
ein oberes Ende der Hupe (70) ist oberhalb eines oberen Endes des Kühlers (40) angeordnet.

9. Motorrad (10) nach Anspruch 6, 7 oder 8, das ferner einen Motor (30) umfasst, der einen Zylinder (30a) hat, der wenigstens teilweise hinter der Hauptöffnung (72) angeordnet ist, wobei die Hupe (70) in der Vorderansicht von dem Zylinder (30a) seitlich nach außen angeordnet ist.

10. Motorrad (10) nach einem der Ansprüche 6 bis 9, wobei die Hupenöffnung (60) zu einer seitlichen Seite der Hauptöffnung (72) geformt ist.

11. Motorrad (10) nach einem der Ansprüche 6 bis 10, wobei eine oder mehrere Luftströmungsöffnungen (50L, 50R, 52L, 52R) unterhalb der Hauptöffnung (72) und der Hupenöffnung (60) in der inneren Platte (42) geformt sind.

12. Motorrad (10) nach einem der vorhergehenden Ansprüche, das ferner ein Auspuffrohr (33) umfasst, das rechts oder links von einer Mitte des Motorrades (10) angeordnet ist, wobei die Hupe (70) in Bezug auf eine seitliche Richtung des Motorrades (10) auf einer zu dem Auspuffrohr (33) entgegengesetzten Seite angeordnet ist.

13. Motorrad (10) nach einem der vorhergehenden Ansprüche, das ferner einen Einzylindermotor (30) umfasst.

14. Motorrad (10) nach einem der vorhergehenden Ansprüche, das mehrere Hupen (70) umfasst.

15. Motorrad (10) nach Anspruch 14, wobei wenigstens zwei der mehreren Hupen (70) in der Vorderansicht in der gleichen vertikalen Position angeordnet sind.

16. Motorrad (10) nach Anspruch 14 oder 15, wobei wenigstens zwei der mehreren Hupen (70) in der Vorderansicht rechts und links von einer seitlichen Mitte der inneren Platte (42) angeordnet sind.

## Revendications

1. Motocycle (10), comprenant:
une fourche avant (14), supportant de manière rotative une roue avant (12) au niveau de sa partie d'extrémité inférieure ;
un tube avant pour supporter la fourche avant ;
un carénage avant (20) pour recouvrir une partie avant du tube avant (11) ;
un panneau interne (42) agencé derrière la roue avant (12) et au-dessous du carénage avant (20) ;
des couvertures latérales de gauche et de droite, agencées latéralement vers l'extérieur du panneau interne et s'étendant vers l'arrière ; et
un avertisseur sonore (70), dont au moins une partie est agencée latéralement vers l'extérieur de la fourche avant (14), dans une position dans laquelle l'avertisseur sonore (70) chevauche le panneau interne (42) dans une vue frontale ; dans lequel
l'avertisseur sonore (70) est agencé derrière le panneau interne (42), une ouverture de l'avertisseur sonore (60) étant formée dans le panneau interne (42) devant l'avertisseur sonore (70).

2. Motocycle (10) selon la revendication 1, dans lequel l'avertisseur sonore (70) est agencé de sorte à être orienté pratiquement vers l'avant, derrière l'ouverture de l'avertisseur sonore (60).

3. Motocycle (10) selon les revendications 1 ou 2, dans lequel l'avertisseur sonore (70) est agencé de sorte à être espacé vers l'arrière de l'ouverture de l'avertisseur sonore (60).

4. Motocycle (10) selon l'une quelconque des revendications précédentes, dans lequel une partie cylindrique (61) s'étendant vers l'arrière est agencée au niveau d'une périphérie de l'ouverture de l'avertisseur sonore (60) dans le panneau interne (42).

5. Motocycle (10) selon l'une quelconque des revendications précédentes, dans lequel l'ouverture de l'avertisseur sonore (60) est formée au-dessus d'une position centrale verticale du panneau interne (42) dans la vue frontale.

6. Motocycle (10) selon l'une quelconque des revendications précédentes dans lequel le panneau interne (42) comporte une ouverture principale (72) dans une position située latéralement vers l'intérieur de l'avertisseur sonore (70) dans la vue frontale, et configurée de sorte à permettre le passage de l'air en écoulement vers l'arrière de celle-ci.

7. Motocycle (10) selon la revendication 6, dans lequel l'ouverture principale (72) s'étend latéralement à travers un centre latéral du panneau interne (42) dans la vue frontale.

8. Motocycle (10) selon les revendications 6 ou 7, comprenant en outre un radiateur (40) agencé derrière l'ouverture principale (72), présentant au moins l'une des caractéristiques ci-dessous :
l'avertisseur sonore (70) est positionné latéralement vers l'extérieur du radiateur (40) dans la vue frontale ;
l'avertisseur sonore (70) est directement ou indirectement supporté par le radiateur (40) ; ou
une extrémité supérieure de l'avertisseur sonore (70) est positionnée au-dessus d'une extrémité supérieure du radiateur (40).

9. Motocycle (10) selon les revendications 6, 7 ou 8, comprenant en outre un moteur (30) comportant un cylindre (30a) au moins en partie positionné derrière l'ouverture principale (72), l'avertisseur sonore (70) étant positionné latéralement vers l'extérieur du cylindre (30a) dans la vue frontale.

10. Motocycle (10) selon l'une quelconque des revendications 6 à 9, dans lequel l'ouverture de l'avertisseur sonore (60) est formée vers un côté latéral de l'ouverture principale (72).

11. Motocycle (10) selon l'une quelconque des revendications 6 à 10, dans lequel une ou plusieurs ouvertures d'écoulement d'air (50L, 50R, 52L, 52R) sont formées au-dessous de l'ouverture principale (72) et de l'ouverture de l'avertisseur sonore (60) dans le panneau interne (42).

12. Motocycle (10) selon l'une quelconque des revendications précédentes, comprenant en outre un tuyau d'échappement (33), agencé vers la droite ou la gauche d'un centre du motocycle (10), l'avertisseur sonore (70) étant agencé sur un côté opposé du tuyau d'échappement (33) par rapport à une direction latérale du motocycle (10).

13. Motocycle (10) selon l'une quelconque des revendications précédentes, comprenant en outre un moteur à cylindre unique (30).

14. Motocycle (10) selon l'une quelconque des revendications précédentes, comprenant plusieurs avertisseurs sonores (70).

15. Motocycle (10) selon la revendication 14, dans lequel au moins deux des plusieurs avertisseurs sonores (70) sont agencés dans la même position verticale dans la vue frontale.

16. Motocycle (10) selon les revendications 14 ou 15, dans lequel au moins deux des plusieurs avertisseurs sonores (70) sont positionnés vers la droite et la gauche d'un centre latéral du panneau interne (42) dans la vue frontale.
